# EUROPÄISCHE PATENTSCHRIFT

(11) **EP 3 198 697 B1**
(45) Veröffentlichungstag und Bekanntmachung des Hinweises auf die Patenterteilung: **18.08.2021**
(21) Anmeldenummer: 15775654.5
(22) Anmeldetag: 23.09.2015
(51) Int. Cl.: H02H 3/027, H02H 3/44, H02H 7/122, H02H 7/08, H02H 7/085, H02H 7/26

(54) **VERFAHREN UND VORRICHTUNG ZUR ÜBERWACHUNG EINES ELEKTRISCHEN NETZWERKS IN EINEM SCHIENENFAHRZEUG SOWIE SCHIENENFAHRZEUG**
METHOD AND DEVICE FOR MONITORING AN ELECTRICAL NETWORK IN A RAIL VEHICLE, AND RAIL VEHICLE
PROCÉDÉ ET DISPOSITIF DE SURVEILLANCE D'UN RÉSEAU ÉLECTRIQUE DANS UN VÉHICULE FERROVIAIRE ET VÉHICULE FERROVIAIRE

(30) Priorität: 24.09.2014 DE 102014219278
(43) Veröffentlichungstag der Anmeldung: 02.08.2017
(73) Patentinhaber: Bombardier Transportation GmbH, 10785 Berlin (DE)
(72) Erfinder: ISEPPONI, Gerhard, CH-8113 Boppelsen (CH)
(74) Vertreter: Ramrath, Lukas
(86) Internationale Anmeldenummer: PCT/EP2015/071817
(87) Internationale Veröffentlichungsnummer: WO 2016/046247

(56) Entgegenhaltungen:
- WO-A1-2013/010591
- WO-A1-2013/077152
- DE-A1-102011 012 314
- US-A- 4 203 142
- US-A- 5 578 912

## Beschreibung

Die Erfindung betrifft ein Verfahren und eine Vorrichtung zur Überwachung eines elektrischen Netzwerks in einem Schienenfahrzeug sowie ein Schienenfahrzeug.

In Schienenfahrzeugen werden Asynchron- als auch Synchronmaschinen,u.a. sogenannte Permanentmagnetmaschinen (PMM), die auch als Permanentmagnet-Motoren bezeichnet werden können, zum Antrieb des Schienenfahrzeugs eingesetzt. Die zum Antrieb des Schienenfahrzeugs dienenden Maschinen werden folgend auch als Antriebsmotoren bezeichnet. Diese werden über ein in der Regel dreiphasiges elektrisches Netzwerk mit elektrischer Energie versorgt. Das elektrische Netzwerk umfasst hierbei auch einen Stromrichter, der in einem motorischen Betrieb der Permanentmagnetmaschine eine Gleichspannung, beispielsweise eine Zwischenkreisspannung, in eine gewünschte Wechselspannung zum Versorgen des Antriebsmotors umwandelt. Der Stromrichter kann in einem generatorischen Betrieb des Antriebsmotors jedoch auch die vom Antriebsmotor erzeugte Wechselspannung in eine Gleichspannung umwandeln.

In dem elektrischen Netzwerk können Kurzschlüsse auftreten. Diese können sowohl innerhalb des Antriebsmotors, z.B. innerhalb eines Gehäuses der Maschine, oder entlang einer Phasenleitung zur Verbindung des Stromrichters und des Antriebsmotors auftreten. Auch können Kurzschlüsse im Stromrichter auftreten. Bei Kurzschlüssen können auch sogenannte Lichtbögen auftreten, die zu einer ungewünschten Zerstörung von Bauteilen des Schienenfahrzeuges führen können.

Es ist bekannt, eine Höhe eines Phasenstroms zu überwachen, wobei ein Kurzschluss detektiert wird, wenn die Höhe des Phasenstroms über einem vorbestimmten Schwellwert liegt.

Wird ein solcher Kurzschluss detektiert, so wird in der Regel der Stromrichter vom Antriebsmotor elektrisch abgetrennt, beispielsweise durch entsprechend angeordnete Leistungsschalter. Gleichzeitig wird, insbesondere im Falle einer Permanentmagnetmaschine als Antriebsmotor, das Schienenfahrzeug bis zum Stillstand abgebremst, um eine potentielle Speisung des Kurzschlusses zu verhindern.

Die DE 10 2011 012 314 A1 betrifft ein Verfahren und eine Vorrichtung zur Steuerung mindestens eines Phasenstromes einer elektrischen Maschine.

Die EP 2 784 891 A1 offenbart eine DC-Einspeiseschutzrelaisvorrichtung mit einer Eingabeeinrichtung, einer ersten Berechnungseinrichtung, einer Halteeinrichtung, einer zweiten Berechnungseinrichtung und einer Erfassungseinrichtung, die einen Fehler einer Speiseschaltung detektieren kann.

Die WO 2013/010591 A1 betrifft ein Verfahren zum Ermitteln eines fehlerbehafteten Abschnitts einer einseitig gespeisten Energieversorgungsleitung, die durch Schalteinrichtungen in mehrere Abschnitte unterteilt ist, wobei jeder Schalteinrichtung eine Messeinrichtung zugeordnet ist.

Die US 4 203 142 A betrifft eine Wagenvorrichtung für Minen, insbesondere eine Detektion eines Erdschlusses in solchen Wagenvorrichtungen.

Die US 5 578 912 A betrifft eine Motorantriebsvorrichtung für einen elektrischen Fensterheber in einem Personenwagen, insbesondere eine Vorrichtung zur Detektion von Motorproblemen wie Überbrückung, Kurzschluss und Leerlauf.

Es stellt sich das technische Problem, eine Vorrichtung und ein Verfahren zur Überwachung eines elektrischen Netzwerks eines Schienenfahrzeugs und ein Schienenfahrzeug zu schaffen, welche eine alternative, gleichwohl jedoch zuverlässige und zeitlich schnelle Detektion eines Netzwerkfehlers ermöglichen. Weiter stellt sich das technische Problem, eine Lokalisierung eines Netzwerkfehlers zu ermöglichen, um ein verbessertes Fehlermanagement zu schaffen.

Die Lösung des technischen Problems ergibt sich durch die Gegenstände mit den Merkmalen der Ansprüche 1, 7 und 8. Weitere vorteilhafte Ausgestaltungen der Erfindung ergeben sich aus den Unteransprüchen.

Vorgeschlagen wird ein Verfahren zur Überwachung eines elektrischen Netzwerks in einem Schienenfahrzeug. Das elektrische Netzwerk kann insbesondere ein Traktionsnetz des Schienenfahrzeugs sein oder einen Teil des Traktionsnetzes des Schienenfahrzeugs bezeichnen. Das elektrische Netzwerk dient insbesondere einer Energieübertragung zwischen einem Stromrichter des Schienenfahrzeugs und einem Antriebsmotor des Schienenfahrzeugs.

Das elektrische Netzwerk umfasst mindestens einen Stromrichter. Der Stromrichter kann hierbei sowohl als Wechselrichter als auch als Gleichrichter betrieben werden. Beispielsweise kann der Stromrichter als dreiphasiger Stromrichter ausgebildet sein. Der Stromrichter kann insbesondere elektrische Schaltelemente wie z.B. MOSFET oder IGBT umfassen.

Der Stromrichter kann eingangsseitig mit einem Zwischenkreis, insbesondere einem Zwischenkreiskondensator, des Schienenfahrzeugs elektrisch verbunden sein. Eine über dem Zwischenkreiskondensator abfallende Zwischenkreisspannung, die somit eingangsseitig an dem Stromrichter anliegt, ist eine Gleichspannung. Ausgangsseitig kann der Stromrichter mit dem Antriebsmotor verbunden sein, beispielsweise über mindestens eine Phasenleitung.

Weiter umfasst das elektrische Netzwerk mindestens einen Antriebsmotor. Der Antriebsmotor kann, wie vorhergehend erläutert, eine elektrische Maschine zum Antrieb des Schienenfahrzeugs bezeichnen, insbesondere eine Permanentmagnetmaschine. Der Antriebsmotor kann somit eine Synchronmaschine mit einem permanent magnetisierten Rotor sein. Der Antriebsmotor kann in einem motorischen Betrieb betrieben werden. Hierbei wird elektrische Energie, die vom Stromrichter an den Antriebsmotor übertragen wird, in mechanische Energie umgewandelt. Die elektrische Energie wird hierbei in Form eines Wechselstroms und einer Wechselspannung übertragen, die den Antriebsmotor speisen. In einem generatorischen Betriebsmodus wird mechanische Energie durch den Antriebsmotor in elektrische Energie umgewandelt, wobei die elektrische Energie an den Stromrichter übertragen werden kann. Hierbei erzeugt der Antriebsmotor einen Wechselstrom und eine Wechselspannung.

Weiter umfasst das elektrische Netzwerk mindestens eine erste Phasenleitung zur elektrischen Verbindung des mindestens einen Stromrichters und des mindestens einen Antriebsmotors. Die Phasenleitung bezeichnet hierbei eine elektrische Leitung, durch die ein erster Phasenstrom fließen kann. Vorzugsweise umfasst das elektrische Netzwerk mehr als eine, insbesondere drei, Phasenleitungen. Entlang der ersten Phasenleitung kann mindestens ein elektrisches Schaltelement, beispielsweise ein Leistungsschaltelement, insbesondere ein MOSFET, ein IGBT oder ein Leistungsschalter angeordnet sein. Mittels des elektrischen Schaltelements der ersten Phasenleitung kann eine elektrische Verbindung des Stromrichters und des Antriebsmotors über die erste Phasenleitung unterbrochen oder hergestellt werden.

Bevorzugt ist der Stromrichter ein dreiphasiger Stromrichter, der über drei Phasenleitungen mit einem dreiphasigen Antriebsmotor verbunden ist.

Weiter wird eine Höhe einer Stromänderung des ersten Phasenstroms, insbesondere während einer vorbestimmten Zeitdauer, bestimmt. Die Höhe kann hierbei als Betrag der Stromänderung bestimmt werden oder den Betrag bezeichnen. Somit wird also nicht die Höhe des Stromes bzw. der Stromwert, sondern eine zeitliche Änderung des ersten Phasenstromes bzw. eine Höhe dieser Änderung bestimmt. Die Höhe der Stromänderung kann beispielsweise durch Bilden der ersten Ableitung bestimmt werden.

Im Sinne dieser Erfindung bezeichnet der Begriff Bestimmen ein direktes Erfassen einer Größe, beispielsweise durch eine Erfassungseinrichtung oder einen Sensor, oder die Berechnung der Größe aus mindestens einer direkt erfassten Größe. So kann beispielsweise ein Stromwert des ersten Phasenstroms, z.B. durch einen Stromsensor, erfasst werden, wobei in Abhängigkeit des Stromwerts die Stromänderung während einer vorbestimmten Zeitdauer bestimmt wird.

Das Netzwerk kann daher mindestens eine erste Erfassungseinrichtung zur direkten Erfassung der Stromänderung des ersten Phasenstromes umfassen. Allerdings ist es auch möglich, dass das elektrische Netzwerk eine erste Erfassungseinrichtung zur Erfassung einer elektrischen Größe, beispielsweise des Stromwerts, des ersten Phasenstroms und mindestens eine erste Bestimmungseinrichtung umfasst, wobei die erste Bestimmungseinrichtung die Höhe der Stromänderung des ersten Phasenstroms in Abhängigkeit der erfassten elektrischen Größe bestimmt. Die Bestimmungseinrichtung kann hierbei als FPGA ausgebildet sein.

Sind mehr als eine Phasenleitung, insbesondere drei Phasenleitungen, vorhanden, so kann das elektrische Netzwerk selbstverständlich weitere Erfassungseinrichtungen und gegebenenfalls Bestimmungseinrichtungen umfassen, die eine Bestimmung der Höhe der Stromänderung der weiteren Phasenströme ermöglichen. Somit wird also im Falle einer mehrphasigen Verbindung die Höhe der Stromänderung mindestens eines weiteren Phasenstroms bestimmt.

Beispielsweise kann in einem dreiphasigen elektrischen Netzwerk eine Höhe der Stromänderung des ersten Phasenstromes und eine Höhe der Stromänderung eines weiteren Phasenstromes, beispielsweise eines zweiten Phasenstromes oder eines dritten Phasenstromes, bestimmt werden. Die Höhe der Stromänderung des verbleibenden Phasenstroms kann dann in Abhängigkeit der bereits bestimmten Höhen der Stromänderung bestimmt werden. Hierfür kann das elektrische Netzwerk z. B. einen ersten Stromsensor zur Erfassung des Stromwerts des ersten Phasenstromes und einen weiteren Stromsensor zur Erfassung eines Stromwerts eines weiteren Phasenstroms umfassen. Die Höhe der Stromänderungen kann dann durch eine oder mehrere Bestimmungseinrichtungen bestimmt werden.

Die nachfolgend geschilderten Ausführungsformen des erfindungsgemäßen Verfahrens für die erste Phasenleitung gelten entsprechend für weitere Phasenleitungen des elektrischen Netzwerks.

Weiter wird ein Netzwerkfehler in einem maschinenseitigen Teilnetzwerk detektiert, falls mindestens ein stromänderungsbasiertes Kriterium erfüllt ist. Das stromänderungsbasierte Kriterium ist erfüllt, wenn die Höhe der Stromänderung des ersten Phasenstroms größer als ein vorbestimmter Stromänderungs-Schwellwert ist.

Das maschinenseitige Teilnetzwerk bezeichnet hierbei zumindest den Teil des elektrischen Netzwerks, der zwischen einem Bestimmungspunkt des elektrischen Netzwerks, in oder an dem die Höhe der Stromänderung des ersten Phasenstroms bestimmt wird, und dem Antriebsmotor angeordnet ist und der zumindest einen Teil des Antriebsmotors umfasst. Somit kann das maschinenseitige Teilnetzwerk zumindest den Abschnitt der ersten Phasenleitung, der den vorhergehend erläuterten Bestimmungspunkt mit dem Antriebsmotor verbindet sowie zumindest einen Teil des elektrischen Netzwerkes des Antriebsmotors umfassen.

Der Bestimmungspunkt bezeichnet hierbei einen Punkt oder Abschnitt der ersten Phasenleitung, in dem die erfindungsgemäß zu bestimmende Stromänderung auftritt. So kann der Bestimmungspunkt den Punkt oder Abschnitt bezeichnen, in dem der vorhergehend erläuterte Stromsensor angeordnet ist.

Zusätzlich zu dem maschinenseitigen Teilnetzwerk kann das elektrische Netzwerk auch ein stromrichterseitiges Teilnetzwerk umfassen, wobei das stromrichterseitige Teilnetzwerk den Teil des elektrischen Netzwerks, der zwischen dem Bestimmungspunkt und dem Stromrichter angeordnet ist, und den Stromrichter selbst umfasst.

Ein Netzwerkfehler bezeichnet hierbei insbesondere einen Kurzschluss oder das Auftreten einer unerwünschten, niederinduktiven Verbindung.

Die Stromänderungs-Schwellwerte können hierbei in Abhängigkeit von elektrischen Eigenschaften des elektrischen Netzwerks, insbesondere Induktivitäten des elektrischen Netzwerks, bestimmt werden.

Der Stromrichter des elektrischen Netzwerks oder der stromrichterseitige Teil des elektrischen Netzwerks weist in der Regel eine niedrige Induktivität auf. Tritt im maschinenseitigen Teil des elektrischen Netzwerks ein Netzwerkfehler, insbesondere ein Kurzschluss oder eine unerwünscht niederinduktive Verbindung auf, so wird aufgrund der niedrigen Induktivität des Stromrichters bzw. des stromrichterseitigen Teils für eine kurze Zeit ein sehr hoher Strom vom stromrichterseitigen Teil zum maschinenseitigen Teil des elektrischen Netzwerks fließen. Der Antriebsmotor sowie die Phasenleitung(en) weisen in der Regel eine höhere Induktivität als der Stromrichter bzw. der stromrichterseitige Teil des elektrischen Netzwerks auf. Tritt ein Netzwerkfehler, insbesondere ein Kurzschluss oder eine unerwünscht niederohmige Verbindung, im stromrichterseitigen Teil auf, so wird im Vergleich zu dem Fall eines Netzwerkfehlers im maschinenseitigen Teil für eine längere Zeit ein niedrigerer Strom vom maschinenseitigen Teilnetzwerk zum stromrichterseitigen Teilnetzwerk fließen. Somit ergibt sich, dass bei einem Netzwerkfehler im maschinenseitigen Teil eine hohe Stromänderung auftritt, während bei einem Netzwerkfehler im stromrichterseitigen Teil eine im Vergleich niedrigere Stromänderung auftritt. Jedoch ist davon auszugehen, dass zumindest die Stromänderung bei einem Netzwerkfehler im maschinenseitigen Teilnetzwerk höher als eine maximal zulässige oder maximal zu erwartende Stromänderung im fehlerfreien Zustand des elektrischen Netzwerkes ist.

Der/Die Stromänderungs-Schwellwert(e) kann/können durch den Fachmann in Abhängigkeit der elektrischen Eigenschaften des elektrischen Netzwerks bestimmt werden, beispielsweise durch geeignete Simulationen und/oder Versuche und/oder Berechnungen.

Insgesamt ergibt sich in vorteilhafter Weise, dass durch die Auswertung der Höhe der Stromänderung ein Netzwerkfehler zuverlässig und zeitlich schnell detektiert werden kann, wobei dieser Netzwerkfehler zusätzlich dem maschinenseitigen Teilnetzwerk zugeordnet werden kann. Somit wird in vorteilhafter Weise neben der reinen Detektion eines Netzwerkfehlers gleichzeitig eine Lokalisierung des Netzwerkfehlers ermöglicht.

Wie nachfolgend noch näher erläutert, können somit von einem Fehlerort abhängige Schutzfunktionen eingeleitet werden.

Weiter wird in Abhängigkeit der Höhe der Stromänderung ein Fehlerort im maschinenseitigen Teilnetzwerk bestimmt.

Beispielsweise kann davon ausgegangen werden, dass ein Zusammenhang zwischen der Höhe der Stromänderung und eine Distanz des Fehlerorts im maschinenseitigen Teilnetzwerk vom vorhergehend erläuterten Bestimmungspunkt derart gegeben ist, dass sich die Höhe der Stromänderung mit zunehmender Distanz verringert. Beispielsweise kann sich die Höhe der Stromänderung mit zunehmender Distanz linear oder exponentiell verringern.

Diese Distanz kann hierbei eine Länge einer, insbesondere kürzesten, elektrischen Verbindung, beispielsweise der Phasenleitung, bezeichnen, die den vorhergehend erläuterten Bestimmungspunkt und den Fehlerort verbindet.

Der vorhergehend erläuterte Stromänderungs-Schwellwert kann hierbei derart gewählt werden, dass ein Netzwerkfehler unabhängig vom Fehlerort im maschinenseitigen Teilnetzwerk detektierbar ist. Dies bedeutet, dass der vorbestimmte Stromänderungs-Schwellwert derart gewählt wird, dass auch bei einer maximalen Distanz zwischen dem Fehlerort im maschinenseitigen Teilnetzwerk und dem Bestimmungspunkt ein Netzwerkfehler detektierbar ist.

Zusätzlich kann dann in Abhängigkeit des vorbekannten Zusammenhangs zwischen der Höhe der Stromänderung und der vorhergehend erläuterten Distanz die Distanz des Fehlerorts abhängig von der bestimmten Höhe der Stromänderung bestimmt werden.

Es ist z. B. möglich, das maschinenseitige Teilnetzwerk in mehrere Abschnitte zu unterteilen. Jedem Abschnitt kann hierbei eine abschnittsspezifische minimale Höhe der Stromänderung und eine abschnittsspezifische maximale Höhe der Stromänderung und somit ein abschnittsspezifisches Intervall der Höhe der Stromänderung zugeordnet werden. Je geringer die Distanz des Abschnitts vom Bestimmungspunkt, desto höher ist die abschnittsspezifische minimale Höhe der Stromänderung und die abschnittsspezifische maximale Höhe der Stromänderung zu wählen.

In Abhängigkeit der erfindungsgemäß bestimmten Höhe der Stromänderung kann dann das entsprechende Intervall bestimmt werden, in welchem die bestimmte Höhe der Stromänderung liegt. Als Fehlerort kann dann der Abschnitt bestimmt werden, der diesem Intervall zugeordnet ist.

Hierdurch ergibt sich in vorteilhafter Weise eine genauere örtliche Lokalisierung des Fehlerorts. Dies wiederum erlaubt in vorteilhafter Weise eine verbesserte fehlerortabhängige Durchführung von Schutzfunktionen.

In einer weiteren Ausführungsform wird die Stromänderung des ersten Phasenstromes zyklisch bestimmt. Ein Zyklus kann hierbei eine vorbestimmte Zeitdauer aufweisen, beispielsweise eine Zeitdauer in einem Bereich von 1 µs (einschließlich) bis 5 µs (einschließlich). Vorzugsweise beträgt die Zeitdauer eines Zyklus 2 µs.

Das stromänderungsbasierte Kriterium ist erfüllt, falls für mindestens eine vorbestimmte Anzahl von Zyklen, insbesondere von zeitlich unmittelbar aufeinander folgenden Zyklen, jeweils die Höhe der Stromänderung größer als der vorbestimmte Stromänderungs-Schwellwert ist. Hierdurch wird in vorteilhafter Weise eine Zuverlässigkeit der Detektion erhöht.

In einer weiteren Ausführungsform wird eine Höhe des ersten Phasenstroms bestimmt. Die Höhe kann hierbei als Betrag bestimmt werden oder den Betrag bezeichnen. Die Höhe kann beispielsweise eine Amplitude oder ein RMS-Wert des ersten Phasenstroms sein. Weiter wird ein Netzwerkfehler in dem maschinenseitigen Teilnetzwerk detektiert, falls zusätzlich ein stromwertbasiertes Kriterium erfüllt ist, wobei das stromwertbasierte Kriterium erfüllt ist, wenn die Höhe des ersten Phasenstromes größer als ein vorbestimmter Stromwert-Schwellwert ist.

Somit müssen mindestens zwei Kriterien erfüllt sein, um einen Netzwerkfehler im maschinenseitigen Teilnetzwerk zu detektieren. Hierdurch wird eine Zuverlässigkeit der Detektion weiter erhöht.

In einer weiteren Ausführungsform wird bei Detektion eines Netzwerkfehlers im maschinenseitigen Netzwerkteil ein Fehlerort im maschinenseitigen Netzwerkteil bestimmt und eine fehlerortabhängige Schutzfunktion durchgeführt, wobei ein Stromfluss durch einen fehlerbehafteten Netzwerkabschnitt reduziert wird. Der fehlerbehaftete Netzwerkabschnitt kann hierbei den Fehlerort enthalten. Beispielsweise kann ein Stromfluss durch den fehlerbehafteten Netzwerkabschnitt unterbrochen werden. Hierzu kann der fehlerbehaftete Netzwerkabschnitt ein- oder zweiseitig isoliert werden. Die Reduktion oder Unterbrechung des Stromflusses durch den fehlerbehafteten Netzwerkabschnitt kann beispielsweise durch Öffnen mindestens eines elektrischen Schaltelementes erfolgen, welches den fehlerbehafteten Netzwerkabschnitt mit einem weiteren Netzwerkabschnitt verbindet. Dies ist insbesondere vorteilhaft, wenn der Antriebsmotor als Permanentmagnetmaschine ausgeführt ist.

Hierzu kann das elektrische Netzwerk, insbesondere die erste Phasenleitung, ein oder mehrere elektrische Schaltelemente umfassen, durch die eine elektrische Verbindung verschiedener Abschnitte der Phasenleitung unterbrochen oder hergestellt werden kann.

Alternativ oder kumulativ kann die Drehzahl des Antriebsmotors reduziert werden. Hierfür kann beispielsweise ein Läufer der Permanentmagnetmaschine gebremst werden. Vorzugsweise kann jedoch das Schienenfahrzeug mittels mindestens einer Bremseinrichtung gebremst werden. Selbstverständlich kann die Drehzahl des Antriebsmotors auf Null reduziert werden.

Selbstverständlich kann auch ohne Bestimmung des Fehlerorts im maschinenseitigen Teilnetzwerk der Stromfluss durch die Phasenleitung reduziert, insbesondere unterbrochen, werden und/oder die Drehzahl des Antriebsmotors reduziert werden.

Somit ergibt sich in vorteilhafter Weise ein Verfahren zum Fehlermanagement in dem elektrischen Netzwerk.

In einer alternativen Ausführungsform wird bei Detektion eines Netzwerkfehlers im maschinenseitigen Netzwerkteil die Drehzahl des Antriebsmotors reduziert. Hierbei kann auf die vorhergehenden Erläuterungen verwiesen werden. In dieser alternativen Ausführungsform wird somit kein Fehlerort im maschinenseitigen Teilnetzwerk bestimmt. Somit wird also eine fehlerortunabhängige Schutzfunktion durchgeführt.

Alternativ oder kumulativ wird in diesem Fall die elektrische Verbindung zwischen dem Stromrichter und dem Antriebsmotor, also mindestens die erste Phasenleitung, unterbrochen werden. Hierdurch ergibt sich in vorteilhafter Weise eine hohe Betriebssicherheit, wenn ein Fehlerort im maschinenseitigen Teilnetzwerk nicht ausreichend genau bestimmbar ist oder nicht bestimmt wird. In diesem Fall wird der Antriebsmotor teilweise oder vorzugsweise vollständig abgebremst, um ein Speisen des Netzwerkfehlers, insbesondere des Kurzschlusses, zu unterbinden.

In einer weiteren Ausführungsform umfasst das elektrische Netzwerk drei Phasenleitungen zur elektrischen Verbindung des mindestens einen Stromrichters und des mindestens einen Antriebsmotors, wobei eine Höhe einer Stromänderung aller Phasenströme bestimmt wird. Hierzu können alle Phasenströme erfasst werden, z.B. jeweils mittels eines Stromsensors. Auch können nur zwei der drei Phasenströme erfasst und der verbleibende Phasenstrom in Abhängigkeit der erfassten Phasenströme berechnet werden

Weiter wird ein phasenspezifischer Netzwerkfehler in dem maschinenseitigen Teilnetzwerk detektiert wird, falls das mindestens eine stromänderungsbasierte Kriterium für eine der Phasenleitungen erfüllt ist. Somit ergibt sich in vorteilhafter Weise, dass ein dreiphasiges Netzwerk zuverlässig überwacht werden kann.

Wird in nur einer der Phasenleitungen ein Netzwerkfehler detektiert, so kann diese Phasenleitung oder können alle Phasenleitungen unterbrochen werden. Werden in nur zwei der Phasenleitungen jeweils Netzwerkfehler detektiert, so können diese beiden Phasenleitungen oder können alle Phasenleitungen unterbrochen werden. Werden in drei Phasenleitungen jeweils Netzwerkfehler detektiert, so können alle Phasenleitungen unterbrochen werden.

Weiter vorgeschlagen wird eine Vorrichtung zur Überwachung eines elektrischen Netzwerks in einem Schienenfahrzeug. Die Vorrichtung ist hierbei derart ausgebildet, dass ein Verfahren gemäß einer der vorhergehend erläuterten Ausführungsformen mit der Vorrichtung durchführbar ist. Insbesondere umfasst die Vorrichtung mindestens eine Auswerteeinrichtung.

Das elektrische Netzwerk, welches mittels der Vorrichtung überwacht wird, ist hierbei wie vorhergehend erläutert ausgebildet. Weiter umfasst die Vorrichtung mindestens eine Auswerteeinrichtung und mindestens eine erste Einrichtung zur Bestimmung einer Höhe einer Stromänderung eines ersten Phasenstromes. Die erste Einrichtung zur Bestimmung der Stromänderung kann hierbei wie vorhergehend erläutert als Einrichtung zur Erfassung der Stromänderung ausgebildet sein. Alternativ kann die erste Einrichtung auch eine Einrichtung zur Erfassung einer elektrischen Größe und eine Bestimmungseinrichtung umfassen, wobei in Abhängigkeit der erfassten elektrischen Größe die Stromänderung durch die Bestimmungseinrichtung bestimmbar ist. Die Auswerteeinrichtung und die mindestens erste Einrichtung zur Bestimmung können hierbei auch als gemeinsame Einrichtung ausgebildet sein. Auch die Einrichtung zur Erfassung einer elektrischen Größe und die Bestimmungseinrichtung können als gemeinsame Einrichtung ausgebildet sein.

Weiter ist eine Höhe der Stromänderung des ersten Phasenstroms bestimmbar.

Weiter ist durch die Auswerteeinrichtung ein Netzwerkfehler in einem maschinenseitigen Teilnetzwerk detektierbar, falls mindestens ein stromänderungsbasiertes Kriterium erfüllt ist, wobei das stromänderungsbasierte Kriterium erfüllt ist, wenn die Höhe der Stromänderung des ersten Phasenstroms größer als ein vorbestimmter Stromänderungs-Schwellwert ist.

Die Vorrichtung ermöglicht hierbei in vorteilhafter Weise die Ausführung eines der vorhergehend erläuterten Verfahren.

Weiter vorgeschlagen wird ein Schienenfahrzeug, wobei das Schienenfahrzeug die vorhergehend erläuterte Vorrichtung umfasst. Hierdurch ergibt sich in vorteilhafter Weise ein Schienenfahrzeug mit einer hohen Betriebssicherheit.

Die Erfindung wird anhand mehrerer Ausführungsbeispiele näher erläutert. Die Figuren zeigen:
- Fig. 1: ein exemplarisches Ersatzschaltbild eines elektrischen Netzwerks in einem Schienenfahrzeug,
- Fig. 2: ein schematisches Schaltbild eines elektrischen Netzwerks des Schienenfahrzeugs und verschiedene Arten der Fehlerdetektion und
- Fig. 3: einen exemplarischen funktionellen Zusammenhang zwischen einer Höhe einer Stromänderung und einer Distanz eines Fehlerorts von einem Bestimmungspunkt.

Nachfolgend bezeichnen gleiche Bezugszeichen Elemente mit gleichen oder ähnlichen technischen Merkmalen.

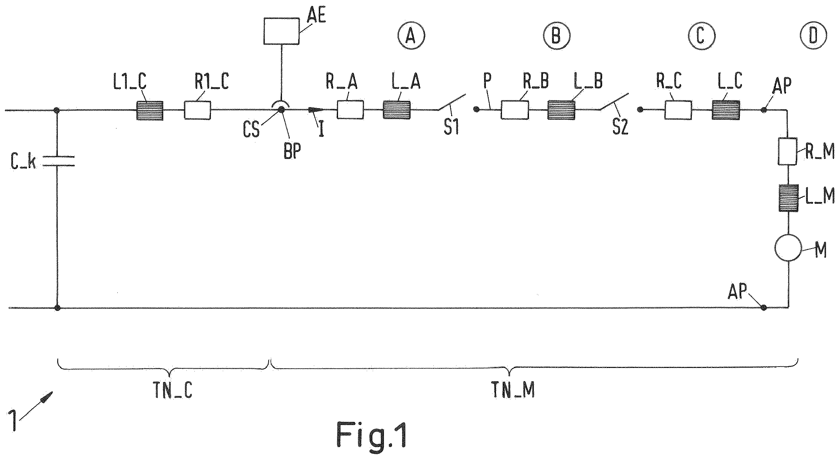

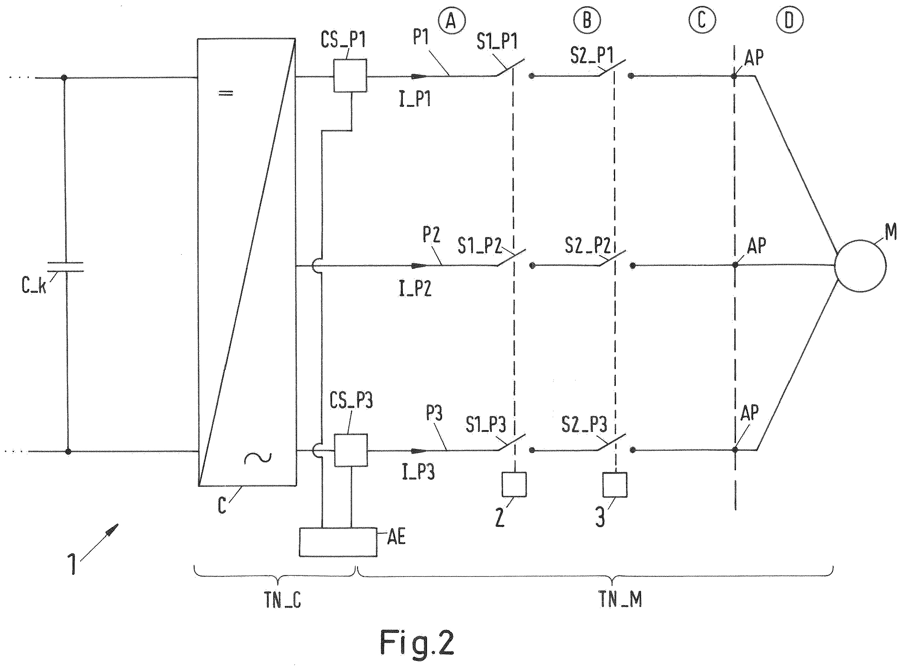

In Fig. 1 ist ein Ersatzschaltbild des elektrischen Netzwerks 1 eines Schienenfahrzeuges (nicht dargestellt) abgebildet. Hierbei handelt es sich um ein 2-Phasensystem, wobei die elektrischen Bauelemente einer Hin- und Rückleitung in der oberen Phasenleitung zusammengefasst dargestellt sind. Das elektrische Netzwerk 1 umfasst einen Stromrichter C (siehe Fig. 2), wobei in Fig. 1 eine resultierende Induktivität L1_C und ein resultierender Widerstand R1_C des Stromrichters C dargestellt sind. Weiter dargestellt ist ein Zwischenkreiskondensator C_k. Weiter umfasst das elektrische Netzwerk 1 eine Permanentmagnetmaschine M, wobei auch eine resultierende Induktivität L_M und ein resultierender Widerstand R_M der Permanentmagnetmaschine M dargestellt sind. Weiter dargestellt ist eine Phasenleitung P mit einem ersten Abschnitt A, einem zweiten Abschnitt B und einem dritten Abschnitt C.

Weiter dargestellt sind ein Stromsensor CS und eine Auswerteeinrichtung AE. Der Stromsensor CS erfasst einen Stromwert in einem Bestimmungspunkt BP der Phasenleitung P. Hierbei ist ein Strom I exemplarisch dargestellt.

Die Auswerteeinrichtung AE bestimmt in Abhängigkeit des Stromwerts und einer Zeitdauer dt eine Stromänderung dl/dt. Diese Stromänderung wird zyklisch bestimmt.

Weiter dargestellt sind resultierende Widerstände R_A, R_B, R_C der einzelnen Abschnitte A, B, C der Phasenleitung P. Entsprechend sind auch resultierende Induktivitäten L_A, L_B, L_C der Abschnitte A, B, C dargestellt.

Entlang der Phasenleitung P ist ein erstes elektrisches Schaltelement S1 angeordnet welches beispielsweise als Motorleistungsschalter bezeichnet werden kann. Weiter ist entlang der Phasenleitung P ein weiteres elektrisches Schaltelement S2 angeordnet, welches beispielsweise als Notaus--Motorleistungsschalter bezeichnet werden kann. Mittels der Schaltelemente S1, S2 ist eine elektrische Verbindung zwischen dem Stromrichter C und der Permanentmagnetmaschine M über die Phasenleitung P herstellbar oder unterbrechbar.

Der erste Abschnitt A umfasst hierbei zumindest einen Abschnitt der Phasenleitung P zwischen dem Bestimmungspunkt BP und dem ersten elektrischen Schaltelement S1.

Der zweite Abschnitt B umfasst hierbei einen Abschnitt der Phasenleitung P zwischen dem ersten elektrischen Schaltelement S1 und dem zweiten elektrischen Schaltelement S2.

Die Schaltelemente S1, S2 sind hierbei derart angeordnet, dass der erste Abschnitt A mittels des ersten Schaltelements S1 mit dem zweiten Abschnitt B verbindbar ist. Weiter ist der zweite Abschnitt B mittels des zweiten Schaltelements S2 mit dem dritten Abschnitt C verbindbar. Nicht dargestellt sind Motorenschutzschalter, die eine Unterbrechung der elektrischen Verbindung in Anschlusspunkten AP der Permanentmagnetmaschine M ermöglichen.

Der dritte Abschnitt C umfasst hierbei einen Abschnitt der Phasenleitung P zwischen dem zweiten elektrischen Schaltelement S2 und einem Anschlusspunkt AP der Permanentmagnetmaschine M. Weiter dargestellt ist ein vierter Abschnitt D, der das elektrische Netzwerk der Permanentmagnetmaschine M bis zu den Anschlusspunkten AP umfasst.

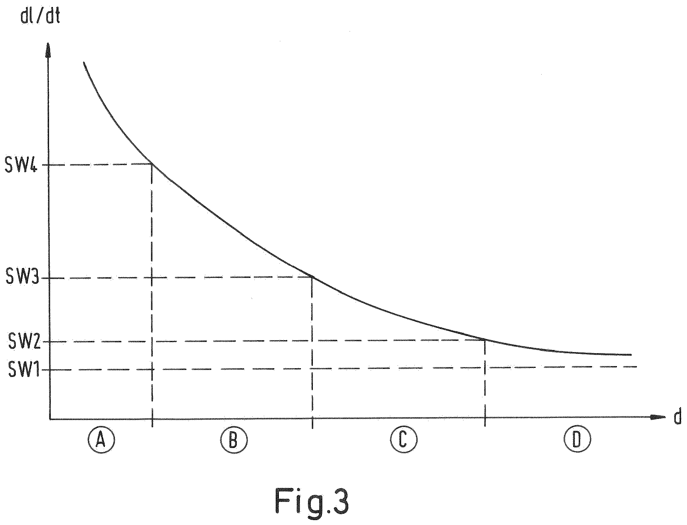

Mittels der Auswerteeinrichtung AE ist eine Höhe bzw. ein Betrag der Stromänderung des Phasenstroms I in jedem Zyklus bestimmbar. Weiter wird mittels der Auswerteeinrichtung AE ausgewertet, ob ein stromänderungsbasiertes Kriterium erfüllt ist, wobei dieses Kriterium erfüllt ist, wenn die Höhe der Stromänderung des Phasenstromes I in jedem Zyklus größer als ein erster vorbestimmter bzw. der Betrag des Stromänderungs-Schwellwerts SW1 (siehe Fig. 3) ist.

Ist das stromänderungsbasierte Kriterium erfüllt, so wird ein Netzwerkfehler, insbesondere ein Kurzschluss, in einem maschinenseitigen Teilnetzwerk TN_M detektiert. Das maschinenseitige Teilnetzwerk TN_M umfasst hierbei zumindest den Teil des elektrischen Netzwerks 1, der den Teil der Phasenleitung P umfasst, der zwischen dem Bestimmungspunkt BP und Anschlusspunkt AP der Permanentmagnetmaschine M angeordnet ist. Weiter umfasst das maschinenseitige Teilnetzwerk TN_M zumindest einen Teil des elektrischen Netzwerks der Permanentmagnetmaschine M.

Ebenfalls dargestellt ist ein stromrichterseitiges Teilnetzwerk TN_C. Dies umfasst zumindest einen Teil des elektrischen Netzwerks des Stromrichters C (nicht dargestellt) sowie den Teil der Phasenleitung P, der den Stromrichter C und den Bestimmungspunkt BP verbindet.

Der wie vorhergehend beschrieben detektierte Netzwerkfehler wird hierbei in dem maschinenseitigen Teilnetzwerk TN_M detektiert.

Es ist weiter möglich, dass durch die Auswerteeinrichtung AE eine Höhe bzw. ein Betrag des Phasenstroms I bestimmt wird. In diesem Fall kann ein Netzwerkfehler in dem maschinenseitigen Teilnetzwerk TN_M detektiert werden, falls zusätzlich ein stromwertbasiertes Kriterium erfüllt ist. Dieses ist erfüllt, wenn die Höhe des Phasenstroms I größer als ein vorbestimmter Stromwert-Schwellwert ist.

Wird ein Netzwerkfehler im maschinenseitigen Teilnetzwerk TN_M detektiert, so kann mindestens eines der Schaltelemente S1, S2, vorzugsweise beide Schaltelemente S1, S2, geöffnet werden.

In Fig. 2 ist schematisch ein dreiphasiges elektrisches Netzwerk 1 eines Schienenfahrzeugs (nicht dargestellt) abgebildet. Hierbei ist wiederum ein Zwischenkreiskondensator C_k dargestellt, der eingangsseitig mit einem Stromrichter C elektrisch verbunden ist. Ausgangsseitig ist der Stromrichter C über drei Phasen P1, P2, P3 mit einer Permanentmagnetmaschine M verbunden. In Fig. 2 sind keine resultierenden Widerstände und resultierenden Induktivitäten dargestellt.

Weiter dargestellt ist ein erster Stromsensor CS_P1 zur Erfassung eines ersten Phasenstromes I_P1 in einer ersten Phasenleitung P1. Weiter dargestellt ist ein weiterer Stromsensor CS_P3 zur Erfassung eines dritten Phasenstromes I_P3 in einer dritten Phasenleitung P3. Ein zweiter Phasenstrom I_P2 in einer zweiten Phasenleitung P2 kann in Abhängigkeit der verbleibenden Phasenströme I_P1, I_P3 bestimmt werden.

Entsprechend der in Fig. 1 dargestellten Phasenleitung P umfasst jede der Phasenleitungen P1, P2, P3 jeweils ein erstes elektrisches Schaltelement S1_P1, S1_P2, S1_P3 und ein zweites elektrisches Schaltelement S2_P1, S2_P2, S2_P3. Ebenfalls dargestellt ist eine Unterteilung der jeweiligen Phasenleitung P1, P2, P3 in Abschnitte A, B, C. Ebenfalls dargestellt sind Anschlusspunkte AP der Permanentmagnetmaschine M, wobei ein vierter Abschnitt D ein elektrisches Netzwerk der Permanentmagnetmaschine M umfasst. Hierbei ist dargestellt, dass die ersten elektrischen Schaltelemente S1_P1, S1_P2, S1_P3 durch eine Steuereinrichtung 2 gesteuert werden, d.h. geöffnet oder geschlossen werden können. Hierbei können die ersten elektrischen Schaltelemente S1_P1, S1_P2, S1_P3 durch die Steuereinrichtung 2 gemeinsam, insbesondere gleichzeitig, gesteuert werden.

Weiter ist dargestellt, dass die zweiten elektrischen Schaltelemente S2_P1, S2_P2, S2_P3 durch eine zweite Steuereinrichtung 3 gesteuert werden, d.h. geöffnet oder geschlossen werden können. Hierbei können die zweiten elektrischen Schaltelemente S2_P1, S2_P2, S2_P3 durch die zweite Steuereinrichtung 3 ebenfalls gemeinsam, insbesondere gleichzeitig, gesteuert werden.

Durch eine Auswerteeinrichtung AE kann eine Höhe bzw. ein Betrag einer Stromänderung sowohl des ersten Phasenstromes I_P1, des zweiten Phasenstromes I_P2 und des dritten Phasenstromes I_P3 zyklisch bestimmt werden. Ein Netzwerkfehler in einem maschinenseitigen Teilnetzwerk kann detektiert werden, falls für mindestens einen der Phasenströme I_P1, I_P2, I_P3 das vorhergehend erläuterte stromänderungsbasierte Kriterium erfüllt ist.

Wird ein Netzwerkfehler im maschinenseitigen Teilnetzwerk TN_M detektiert, so können mindestens zwei, vorzugsweise jedoch alle, der ersten Schaltelemente S1_P1, S1_P2, S1_P3 geöffnet werden. Alternativ oder kumulativ können mindestens zwei, vorzugsweise jedoch alle, der zweiten Schaltelemente S1_P1, S1_P2, S1_P3 geöffnet werden. Insbesondere kann das/können die ersten und/oder zweiten Schaltelemente S1_P1, S1_P2, S1_P3, S2_P1, S2_P2, S2_P3 der Phasenleitung/en geöffnet werden, für die das stromänderungsbasierte Kriterium erfüllt ist.

Eine Vorrichtung zur Überwachung des elektrischen Netzwerks 1 kann hierbei zumindest die Auswerteeinrichtung AE umfassen. Vorzugsweise kann diese auch die Stromsensoren CS_P1, CS_P3 umfassen.

In Fig. 3 ist ein exemplarischer Zusammenhang zwischen einer Höhe einer Stromänderung dl/dt und einer Distanz d eines Fehlerortes von einem Bestimmungspunkt BP (siehe Fig. 1) in einer Phasenleitung P1, P2, P3 dargestellt. Hierbei ist dargestellt, dass die durch die Auswerteeinrichtung AE bestimmte Höhe der Stromänderung umso höher ist, je näher der Fehlerort an dem Bestimmungspunkt BP liegt. Insbesondere verringert sich die Höhe der Stromänderung mit zunehmender Distanz d vom Bestimmungspunkt BP exponentiell.

Ist die Höhe der Stromänderung größer als ein erster vorbestimmter Stromänderungs-Schwellwert SW1, so kann ein Netzwerkfehler im maschinenseitigen Teilnetzwerk TN_M (siehe Fig. 1 und Fig. 2) detektiert werden. Somit kann also detektiert werden, dass entweder im ersten Abschnitt A, im zweiten Abschnitt B, im dritten Abschnitt C oder im vierten Abschnitt D (siehe Fig. 1) ein Netzwerkfehler vorliegt.

Wird ein solcher Netzwerkfehler detektiert, so kann beispielsweise die Drehzahl der Permanentmagnetmaschine M reduziert werden, insbesondere indem das Schienenfahrzeug teilweise oder vollständig, d.h. auf Stillstand, abgebremst wird.

Ein Fehlerort im vierten Abschnitt D kann detektiert werden, wenn die Höhe der Stromänderung größer als der erste vorbestimmte Stromänderungs-Schwellwert SW1 und kleiner als ein oder gleich einem zweiten vorbestimmten Stromänderungs-Schwellwert SW2 ist.

Ist die durch die Auswerteeinrichtung AE bestimmte Höhe der Stromänderung größer als der zweite vorbestimmte Stromänderungs-Schwellwert SW2, so kann detektiert werden, dass ein Fehlerort entweder im ersten Abschnitt A oder im zweiten Abschnitt B oder im dritten Abschnitt C des maschinenseitigen Teilnetzwerks TN_M liegt. Ist die Höhe der Stromänderung kleiner als oder gleich einem dritten vorbestimmten Stromänderungs-Schwellwert SW3, jedoch größer als der zweite vorbestimmte Stromänderungs-Schwellwert SW2, so kann detektiert werden, dass der Fehlerort im dritten Abschnitt C liegt.

Entsprechend kann detektiert werden, dass der Fehlerort im zweiten Abschnitt B liegt, wenn die Höhe der Stromänderung größer als der dritte vorbestimmte Stromänderungs-Schwellwert SW3, jedoch kleiner als oder gleich einem vierten vorbestimmten Stromänderungs-Schwellwert SW4 ist. Dass der Fehlerort im ersten Abschnitt A liegt, kann detektiert werden, wenn die Höhe der Stromänderung größer als der vierte vorbestimmte Stromänderungs-Schwellwert SW4 ist.

Abhängig von einem derart bestimmten Abschnitt A, B, C, D des Fehlerortes kann dann eine fehlerortabhängige Schutzfunktion durchgeführt werden. Liegt z.B. der Fehlerort in zweiten Abschnitt B, so können das erste Schaltelement S1 und das zweite Schaltelement S2 (siehe Fig. 1) geöffnet werden. Liegt der Ort im dritten Abschnitt C, so kann z.B. das zweite Schaltelement S2 geöffnet werden und die elektrische Verbindung im Anschlusspunkt AP der Permanentmagnetmaschine M unterbrochen werden.

Liegt der Fehlerort beispielsweise im vierten Abschnitt D, so kann die elektrische Verbindung im Anschlusspunkt AP unterbrochen werden und die Drehzahl des Motors verringert werden. Liegt der Fehlerort im ersten Abschnitt A, so kann das erste Schaltelement S1 geöffnet werden.

Insgesamt ergibt sich somit in vorteilhafter Weise ein Verfahren und eine Vorrichtung zur Überwachung des elektrischen Netzwerks 1 eines Schienenfahrzeugs, das eine zuverlässige und zeitlich schnelle Detektion eines Netzwerkfehlers erlaubt. Gleichzeitig können unnötige Zugabschaltungen, d.h. unnötige Abbremsungen des Schienenfahrzeugs, vermieden werden. Wird nämlich ein Fehlerort außerhalb der Abschnitte C und D bestimmt, so ist nicht zwingendermaßen eine Reduktion der Drehzahl der Permanentmagnetmaschine M erforderlich. Somit ist es möglich, das Schienenfahrzeug mit weiteren Antriebseinrichtungen, beispielsweise weiteren Permanentmagnetmaschinen, anzutreiben.

## Patentansprüche

1. Verfahren zur Überwachung eines elektrischen Netzwerks (1) in einem Schienenfahrzeug, wobei das elektrische Netzwerk (1) mindestens einen Stromrichter (C), mindestens einen Antriebsmotor (M) und mindestens eine erste Phasenleitung (P, P1) zur elektrischen Verbindung des mindestens einen Stromrichters (C) und des mindestens einen Antriebsmotors umfasst,
wobei eine Höhe einer Stromänderung eines ersten Phasenstroms (I, I1) bestimmt wird, wobei ein Netzwerkfehler detektiert wird, falls mindestens ein stromänderungsbasiertes Kriterium erfüllt ist, wobei das stromänderungsbasierte Kriterium erfüllt ist, wenn die Höhe der Stromänderung des ersten Phasenstromes (I, I1) größer als ein vorbestimmter Stromänderungs-Schwellwert (SW1) ist,
**dadurch gekennzeichnet, dass**
der Netzwerkfehler in einem maschinenseitigen Teilnetzwerk (TN_M) detektiert wird, wobei in Abhängigkeit der Höhe der Stromänderung ein Fehlerort im maschinenseitigen Teilnetzwerk (TN_M) bestimmt wird, wobei sich eine Höhe der Stromänderung mit zunehmender Distanz zwischen einem Fehlerort im maschinenseitigen Teilnetzwerk (TN_M) und einem Bestimmungspunkt (BP), in dem die Stromänderung auftritt, verringert.

2. Verfahren nach Anspruch 1, **dadurch gekennzeichnet, dass** die Stromänderung des ersten Phasenstromes (I, I1) zyklisch bestimmt wird, wobei das stromänderungsbasierte Kriterium erfüllt ist, falls für mindestens eine vorbestimmte Anzahl von Zyklen die Höhe der Stromänderung jeweils größer als der vorbestimmte Stromänderungs-Schwellwert (SW1) ist.

3. Verfahren nach einem der vorhergehenden Ansprüche, **dadurch gekennzeichnet, dass** eine Höhe des ersten Phasenstromes (I, I1) bestimmt wird, wobei ein Netzwerkfehler in dem maschinenseitigen Teilnetzwerk (TN_M) detektiert wird, falls zusätzlich ein stromwertbasiertes Kriterium erfüllt ist, wobei das stromwertbasierte Kriterium erfüllt ist, wenn die Höhe des ersten Phasenstromes (I, I1) größer als ein vorbestimmter Stromwert-Schwellwert ist.

4. Verfahren nach einem der vorangegangenen Ansprüche, **dadurch gekennzeichnet, dass** bei Detektion eines Netzwerkfehlers im maschinenseitigen Netzwerkteil (TN_M) ein Fehlerort im maschinenseitigen Teilnetzwerk (TN_M) bestimmt und eine fehlerortabhängige Schutzfunktion durchgeführt wird, wobei ein Stromfluss durch einen fehlerbehafteten Netzwerkabschnitt reduziert wird und/oder eine Drehzahl des Antriebsmotors reduziert wird.

5. Verfahren nach einem der Ansprüche 1 bis 4, **dadurch gekennzeichnet, dass** bei Detektion eines Netzwerkfehlers im maschinenseitigen Netzwerkteil (TN_M) eine Drehzahl des Antriebsmotors reduziert wird und/oder mindestens die erste Phasenleitung (P, P1) unterbrochen wird.

6. Verfahren nach einem der Ansprüche 1 bis 5, **dadurch gekennzeichnet, dass** das elektrische Netzwerk (1) drei Phasenleitungen (P, P1, P2, P3) zur elektrischen Verbindung des mindestens einen Stromrichters (C) und des mindestens einen Antriebsmotors umfasst, wobei eine Höhe einer Stromänderung aller Phasenströme (I, I1, I2, I3) bestimmt wird, wobei ein phasenspezifischer Netzwerkfehler in dem maschinenseitigen Teilnetzwerk (TN_M) detektiert wird, falls das mindestens eine stromänderungsbasierte Kriterium für eine der Phasenleitungen (P, P1, P2, P3) erfüllt ist.

7. Vorrichtung zur Überwachung eines elektrischen Netzwerks (1) in einem Schienenfahrzeug, wobei das elektrische Netzwerk (1) mindestens einen Stromrichter (C), mindestens einen Antriebsmotor und mindestens eine erste Phasenleitung (P, P1) zur elektrischen Verbindung des mindestens einen Stromrichters (C) und des mindestens einen Antriebsmotors umfasst, wobei die Vorrichtung mindestens eine Auswerteeinrichtung (AE) und mindestens eine erste Einrichtung zur Bestimmung einer Höhe der Stromänderung eines ersten Phasenstromes (I, I1, I2, I3) umfasst, wobei eine Höhe der Stromänderung des ersten Phasenstroms (I, I1) bestimmbar ist, wobei ein Netzwerkfehler durch die Auswerteeinrichtung (AE) detektierbar ist, falls mindestens ein stromänderungsbasiertes Kriterium erfüllt ist, wobei das stromänderungsbasierte Kriterium erfüllt ist, wenn die Höhe der Stromänderung des ersten Phasenstroms (I, I1) größer als ein vorbestimmter Stromänderungs-Schwellwert (SW1) ist,
**dadurch gekennzeichnet, dass**
der Netzwerkfehler in einem maschinenseitigen Teilnetzwerk (TN_M) detektierbar ist, wobei in Abhängigkeit der Höhe der Stromänderung ein Fehlerort im maschinenseitigen Teilnetzwerk (TN_M) bestimmbar ist, wobei sich eine Höhe der Stromänderung mit zunehmender Distanz zwischen einem Fehlerort im maschinenseitigen Teilnetzwerk (TN_M) und einem Bestimmungspunkt, in dem die Stromänderung auftritt, verringert.

8. Schienenfahrzeug, umfassend eine Vorrichtung nach Anspruch 7.

## Claims

1. A method for monitoring an electrical network (1) in a rail vehicle, wherein the electrical network (1) comprises at least one power converter (C), at least one drive motor (M) and at least one first phase line (P, P1) for electrically connecting the at least one power converter (C) and the at least one drive motor,
wherein a level of current change of a first phase current (I, I1) is determined, wherein a network error is detected if at least one criterion based on a current change is met, wherein the criterion based on a current change is met if the level of current change of the first phase current (I, I1) is higher than a predetermined current change threshold (SW1),
**characterised in that** the network error is detected in a machine-side sub-network (TN_M), wherein an error location in the machine-side sub-network (TN_M) is determined as a function of the level of current change, wherein the level of current change decreases with increasing distance between the error location in the machine-side sub-network (TN_M) and a determination point (BP) where the current change occurs.

2. The method according to claim 1, **characterised in that** the current change of the first phase current (I, I1) is cyclically determined, wherein the criterion based on a current change is met if the level of current change is respectively higher than the predetermined current change threshold (SW1) for at least a predetermined number of cycles.

3. The method according to one of the preceding claims, **characterised in that** a level of the first phase current (I, I1) is determined, wherein a network error is detected in the machine-side sub-network (TN_M) if a criterion based on a current value is additionally met, wherein the criterion based on a current value is met if the level of the first phase current (I, I1) is higher than a predetermined current value threshold.

4. The method according to one of the preceding claims, **characterised in that**, upon detection of a network error in the machine-side sub-network (TN_M), an error location in the machine-side sub-network (TN_M) is determined and an error location-dependent protective function is executed, wherein the current flow through the network section containing the error is reduced and/or the rotational speed of the drive motor is reduced.

5. The method according to one of claims 1 to 4, **characterised in that** upon detection of a network error in the machine-side sub-network (TN_M) the rotational speed of the drive motor is reduced and/or at least the first phase line (P, P1) is interrupted.

6. The method according to one of claims 1 to 5, **characterised in that** the electrical network (1) comprises three phase lines (P, P1, P2, P3) for electrically connecting the at least one power converter (C) and the at least one drive motor, wherein a level of current change of all phase currents (I, I1, 12, 13) is determined, wherein a phase-specific network error is detected in the machine-side sub-network (TN_M) if the at least one criterion based on a current change is met for one of the phase lines (P, P1, P2, P3).

7. An apparatus for monitoring an electrical network (1) in a rail vehicle, wherein the electrical network (1) comprises at least one power converter (C), at least one drive motor and at least one first phase line (P, P1) for electrically connecting the at least one power converter (C) and the at least one drive motor, wherein the apparatus comprises at least one evaluation device (AE) and at least one first device for determining a level of current change of a first phase current (I, I1, 12, 13), wherein a level of current change of the first phase current (I, II) is determinable, wherein a network error is detectable by the evaluation device (AE) if at least one criterion based on a current change is met, wherein the criterion based on a current change is met if the level of current change of the first phase current (1, 11) is higher than a predetermined current change threshold (SW1),
**characterised in that**
the network error is detectable in a machine-side sub-network (TN_M), wherein an error location in the machine-side sub-network (TN_M) is determinable as a function of the level of current change, wherein the level of current change decreases with increasing distance between the error location in the machine-side sub-network (TN_M) and a determination point where the current change occurs.

8. A rail vehicle comprising a device according to claim 7.

## Revendications

1. Procédé de surveillance d'un réseau électrique (1) dans un véhicule sur rails, dans lequel le réseau électrique (1) comprend au moins un convertisseur de puissance (C), au moins un moteur d'entraînement (M) et au moins une première ligne de phase (P, P1) pour relier électriquement l'au moins un convertisseur de puissance (C) et l'au moins un moteur d'entraînement, dans lequel une intensité d'une variation de courant d'un premier courant de phase (I, I1) est déterminée, dans lequel une défaillance de réseau est détectée si au moins un critère basé sur la variation de courant est rempli, dans lequel le critère basé sur la variation de courant est rempli quand une intensité de la variation de courant du premier courant de phase (I , I1) est supérieure à une valeur de seuil de variation de courant (SW1) prédéterminée,
**caractérisé en ce que**
la défaillance de réseau est détectée dans un réseau partiel côté machine (TN_M), dans lequel un emplacement de défaillance est déterminé dans le réseau partiel côté machine (TN_M) en fonction de l'intensité de la variation de courant, dans lequel une intensité de la variation de courant se réduit au fur et à mesure que la distance entre un emplacement de défaillance dans le réseau partiel côté machine (TN_M) et un point déterminé (BP), dans lequel apparaît la variation de courant, augmente.

2. Procédé selon la revendication 1, **caractérisé en ce que** la variation de courant du premier courant de phase (I, I1) est déterminée de manière cyclique, dans lequel le critère basé sur la variation de courant est rempli si l'intensité de la variation de courant est respectivement supérieure à la valeur de seuil de variation de courant (SW1) prédéterminée pour au moins un nombre prédéterminé de cycles.

3. Procédé selon l'une quelconque des revendications précédentes, **caractérisé en ce qu'**une intensité du premier courant de phase (I, I1) est déterminée, dans lequel une défaillance de réseau est détectée dans le réseau partiel de réseau côté machine (TN_M) si en supplément un critère basé sur la valeur de courant est rempli, dans lequel le critère basé sur la valeur de courant est rempli quand l'intensité du premier courant de phase (I, I1) est supérieure à une valeur de seuil de valeur de courant prédéterminée.

4. Procédé selon l'une quelconque des revendications précédentes, **caractérisé en ce que** lors de la détection d'une défaillance de réseau dans la partie de réseau côté machine (TN_M), un emplacement de défaillance est déterminé dans le réseau partiel côté machine (TN_M) et une fonction de protection dépendant de l'emplacement de défaillance est exécutée, dans lequel un flux de courant à travers une portion de réseau défectueuse est réduit et/ou une vitesse de rotation du moteur d'entraînement est réduite.

5. Procédé selon l'une quelconque des revendications 1 à 4, **caractérisé en ce que** lors de la détection d'une défaillance de réseau dans la partie de réseau côté machine (TN_M), une vitesse de rotation du moteur d'entraînement est réduite et/ou au moins la première ligne de phase (P, P1) est interrompue.

6. Procédé selon l'une quelconque des revendications 1 à 5, **caractérisé en ce que** le réseau électrique (1) comprend trois lignes de phase (P, P1, P2, P3) pour relier électriquement l'au moins un convertisseur de puissance (C) et l'au moins un moteur d'entraînement, dans lequel une intensité d'une variation de courant de tous les courants de phase (I, I1, I2, I3) est déterminée, dans lequel une défaillance de réseau spécifique à la phase est détectée dans le réseau partiel côté machine (TN_M) si l'au moins un critère basé sur la variation de courant est rempli pour une des lignes de phase (P, P1, P2, P3).

7. Dispositif de surveillance d'un réseau électrique (1) dans un véhicule sur rails, dans lequel le réseau électrique (1) comprend au moins un convertisseur de puissance (C), au moins un moteur d'entraînement et au moins une première ligne de phase (P, P1) pour relier électriquement l'au moins un convertisseur de puissance (C) et l'au moins un moteur d'entraînement, dans lequel le dispositif comprend au moins un système d'évaluation (AE) et au moins un premier système pour déterminer une intensité de la variation de courant d'un premier courant de phase (I, I1, I2, I3), dans lequel une intensité de la variation de courant du premier courant de phase (I, I1) peut être déterminée, dans lequel une défaillance de réseau peut être détectée par le système d'évaluation (AE) si au moins un critère basé sur la variation de courant est rempli, dans lequel le critère basé sur la variation de courant est rempli quand l'intensité de la variation de courant du premier courant de phase (I, I1) est supérieure à une valeur de seuil de variation de courant (SW1) prédéterminée,
**caractérisé en ce que**
la défaillance de réseau peut être détectée dans un réseau partiel côté machine (TN_M), dans lequel un emplacement de défaillance peut être déterminé dans le réseau partiel côté machine (TN_M) en fonction de l'intensité de la variation de courant, dans lequel une intensité de la variation de courant se réduit au fur et à mesure que la distance entre un emplacement de défaillance dans le réseau partiel côté machine (TN_M) et un point déterminé, dans lequel apparaît la variation de courant, augmente.

8. Véhicule sur rails comprenant un dispositif selon la revendication 7.
